Europäisches Patentamt

European Patent Office

Office européen des brevets

(11) Veröffentlichungsnummer: **0 036 470**
B1

(19)

(12) **EUROPÄISCHE PATENTSCHRIFT**

(45) Veröffentlichungstag der Patentschrift:
12.09.84

(51) Int. Cl.³: **F 16 F 9/10,** F 16 F 9/54,
F 16 F 15/04, B 60 K 5/12

(21) Anmeldenummer: 81100336.7

(22) Anmeldetag: 17.01.81

(54) **Hydraulisch dämpfendes Lager.**

(30) Priorität: 20.03.80 DE 3010723

(43) Veröffentlichungstag der Anmeldung:
30.09.81 Patentblatt 81/39

(45) Bekanntmachung des Hinweises auf die Patenterteilung:
12.09.84 Patentblatt 84/37

(84) Benannte Vertragsstaaten:
BE FR GB IT NL SE

(56) Entgegenhaltungen:
DE - A - 1 272 049
DE - A - 2 410 813
DE - A - 2 618 333
DE - B - 1 028 394
DE - B - 1 067 263
DE - B - 1 180 195
DE - C - 729 930
DE - U - 1 805 392
FR - A - 1 434 557
US - A - 2 318 862
US - A - 2 540 130
US - A - 2 582 998

(73) Patentinhaber: Boge GmbH, Bogestrasse 50,
D-5208 Eltorf/Sieg (DE)

(72) Erfinder: Honcamp, Günther Dipl.-Ing,
Schützenstrasse 126, D-5483 Bad Neuenahr-Ahrweiler
(DE)
Erfinder: Mayerböck, Wilhelm, Felix-Blass-Strasse 2,
D-5483 Bad Neuenahr-Ahrweiler (DE)

ACTORUM AG

## Beschreibung

Die Erfindung bezieht sich auf ein gummielastisches Lager mit hydraulischer Dämpfung, bei welchem zwischen zwei äusseren starren Stirnwänden, die, insbesondere durch einen die abstützende Last aufnehmenden zentralen Bolzen, gegeneinander verspannt sind, zwei ein Dämpfungsmedium enthaltende Kammern mit gummielastischen Umfangswänden axial hintereinander angeordnet sind, wobei zwischen den beiden Kammern eine wenigstens eine Drosselöffnung zur Verbindung der Kammervolumina enthaltende, mit einem Widerlager verbundene Trennwand angeordnet ist.

Bei den bekannten Lagern (z.B. DE-A-2 618 333, DE-U-1 805 392) der vorstehend beschriebenen Gattung weisen die beiden metallischen Stirnwände an ihrem äusseren Rand zylinder- oder kegelmantelförmige Umfangsflächen auf, an welche die zugehörigen gummielastischen Umfangswände der Kammern anvulkanisiert sind. Dabei sind die gummielastischen Umfangswände gemeinsam mit der gleichfalls gummielastischen Trennwand einstückig ausgebildet, wobei zusätzlich das Widerlager in das Gummi einvulkanisiert ist. Ferner ist zur Umgrenzung der Drosselbohrung zwischen den beiden Kammern eine entsprechende metallische Hülse in das Gummi einvulkanisiert.

Infolge der vorstehend beschriebenen einstückigen Ausbildung ergibt sich bei den bekannten Lagern das Erfordernis einer entsprechend ausgebildeten und grossen Vulkanisierform verbunden mit einem entsprechenden zugehörigen Aufwand. Hierbei ist auch die beschriebene Form der in dem derart herzustellenden Gummimetallteil enthaltenen Metallteile von Bedeutung.

Bei weiteren bekannten Lagern (z.B. US-A-2 540 130) ist ein hydraulisch dämpfendes Lager vorgeschlagen, das aus zwei mit Abstand verbundenen und die abstützende Last aufnehmenden Stirnwänden besteht. Dabei sind die beiden Stirnwände fest mit einem rohrförmigen Metallkern verbunden, so dass ein spulenartiger Körper entsteht. Beiderseits der Trennwand und jeweils einer Stirnwand ist eine Ringkammer vorgesehen, die elastische Begrenzungswände aufweist und mit Dämpfungsmitteln gefüllt ist.

Beide Ringkammern sind über eine Drosselöffnung miteinander verbunden. Nachteilig ist bei einem derartigen Lager, welches lediglich auf Druck arbeitet, dass es nur geringe Quer- und kardanische Bewegungen ausführen kann. Bei vertikaler oder kardanischer Beanspruchung werden die eine Hälfte des Innenringes und ein Aussenring oder Teile derselben auf Zug beansprucht. Dies führt zu einer raschen Zerstörung der elastischen Begrenzungswände. Ausserdem erfordert die Vulkanisation der Gummiringe mit den Metallteilen eine entsprechend ausgebildete und grosse Vulkanisierform, so dass ein entsprechender Aufwand erforderlich ist.

Darüber hinaus sind Vorrichtungen bekannt (z.B. FR-A-1 434 557), die der Dämpfung von Hubschrauber-Rotoren dienen. Die elastischen Gummiwände und axiale Führung in axialer Richtung gestatten nur eine vertikale Belastung. Nachteilig ist, dass auf Grund der Formgebung keine Quer- und kardanischen Bewegungen ausgeführt werden können.

Der vorliegenden Erfindung liegt die Aufgabe zugrunde, ein einfaches und wirksames hydraulisch dämpfendes Lager zu schaffen, welches die Nachteile der bekannten Lager vermeidet und bei welchem insbesondere der Herstell- und Montageaufwand verringert ist.

Diese Aufgabe wird bei einem hydraulisch dämpfenden Lager der eingangs erwähnten Gattung erfindungsgemäss dadurch gelöst, dass die Trennwand starr ausgebildet und fest angeordnet ist und das Widerlager selbst bildet, und dass die gummielastischen Umfangswände der Kammern torusförmig ausgebildet und an der Trennwand befestigt sind. Gemäss einer besonders bevorzugten Ausbildung der Erfindung sind die gummielastischen Umfangswände der einzelnen Kammern jeweils im Querschnitt annähernd halbkreis- oder V-förmig, wobei an den beiden axial innenliegenden Stirnflächen jeder Kammer jeweils ein umlaufendes starres Teil dicht angeschlossen ist, das mit der Trennwand dicht verbunden ist. Dabei weist vorteilhafterweise das metallische und durch Vulkanisation mit der gummielastischen Umfangswand verbundene starre Teil an seiner der Trennwand zugekehrten Stirnfläche wenigstens eine anvulkanisierte umlaufende Dichtlippe auf und ist an seinem von der gummielastischen Umfangswand vorstehenden Rand von einer umlaufenden Nase der Trennwand eingespannt.

Mit Vorteil weisen die gummielastischen Umfangswände jeweils in ihrem axial aussenliegenden Scheitelbereich eine umlaufende starre Kappe auf. Vorteilhafterweise ist die metallische und durch Vulkanisation mit der gummielastischen Umfangswand verbundene Kappe von einer dünnen Gummischicht überzogen, wodurch deren Korrosion verhindert wird. Gemäss einem weiteren vorteilhaften Erfindungsmerkmal weisen die metallischen starren Stirnwände jeweils im Bereich des an sie angrenzenden Scheitelbereichs der gummielastischen Umfangswände eine umlaufende Eindrückung zur Aufnahme dieser auf.

Das erfindungsgemässe hydraulisch dämpfende Lager ist besonders einfach aufgebaut. Insbesondere ergeben sich bei ihm nur einfache Gummi-Metall-Teile und im übrigen keine komplizierten Metallteile in den Formen (vergleiche beispielsweise Zeichnungsfigur 2). Aus diesen Vorteilen ergeben sich neben niedrigen Heizzeiten bei der Vulkanisation eine einfache Montage des erfindungsgemässen Lagers sowie auch grosse Variationsmöglichkeiten durch Kammern mit unterschiedlichen Querschnitten und/oder Federraten. Bei der Ausführungsform, bei welcher in den axial äusseren Scheitelbereichen der gummielastischen Umfangswände jeweils eine metallische Kappe vorgesehen ist, ist eine bessere Aufnahme von Querkräften möglich. Dieser Vorteil wird auch durch das Erfindungsmerkmal unterstützt, gemäss welchem diesen metallischen Kappen entsprechende umlaufende Eindrückungen in den beiden Stirnwänden vorgesehen sind. Darüberhinaus wird ein Verschleiss des Gummis im Scheitelbereich vermieden.

Das erfindungsgemässe hydraulisch dämpfende Lager ist vielfältig verwendbar, beispielsweise als Motorlager, Getriebelager, Fahrerhauslager oder auch als Befestigung der Bremszug/druckstreben von Federbeinachsen bei Kraftfahrzeugen, in Maschinenfüssen, beispielsweise bei Pressen oder dergleichen oder beim Durchfahren der kritischen Drehzahlen bei Kompressoren und statischen Motoraggregaten.

Gemäss einer Weiterbildung der Erfindung hat die der abzustützenden Last zugewandte Kammer ein grösseres Kammervolumen als die andere Kammer. Hierdurch herrscht unter statischer Last stets Druck in der Dämpfungsflüssigkeit, so dass keine Kavitation auftritt.

Nach einer anderen ebenfalls vorteilhaften Weiterbildung der Erfindung weist die gummielastische Umfangswand der der abzustützenden Last zugewandten Kammer eine höhere Federrate auf als die der anderen Kammer. Infolge der härteren Umfangswand der einen Kammer wird die Umfangswand der anderen Kammer stärker vorgespannt und wird somit im Belastungsbereich nicht frei.

Ein erwünschtes geringes Gewicht des erfindungsgemässen Lagers ergibt sich, wenn gemäss einem weiteren Erfindungsmerkmal die Trennwand aus einem Leichtmetallwerkstoff, insbesondere Aluminium, besteht.

Die Erfindung wird nachstehend anhand eines in der Zeichnung schematisch dargestellten Ausführungsbeispiels näher veranschaulicht. Es zeigen:

Fig. 1 im axialen Längsschnitt ein erfindungsgemässes hydraulisch dämpfendes Lager, wobei dieses in der linken Zeichnungshälfte im zusammengesetzten, jedoch unverspannten Zustand und in der rechten Zeichnungshälfte im verspannten Endzustand dargestellt ist, und

Fig. 2 im vergrösserten Detail aus Fig. 1 die gummielastische Umfangswand einer Kammer.

Das dargestellte hydraulisch dämpfende Lager weist zwei äussere metallische Stirnwände 1, 2 auf, die durch einen die abzustützende Last (P) aufnehmenden zentralen Bolzen 3 unter Zwischenschaltung einer Distanzbuchse 4 gegeneinander verspannt sind. Zwischen den Stirnwänden 1, 2 sind zwei eine Dämpfungsflüssigkeit enthaltende Kammern 5, 6 mit gummielastischen Umfangswänden 7, 8 axial hintereinander angeordnet, wobei zwischen den beiden Kammern 5, 6 eine metallische Trennwand 9 angeordnet ist.

Die beiderseits der Trennwand 9 befindlichen Kammern 5, 6 sind jeweils für sich torusförmig umlaufend ausgebildet und an der Trennwand 9 befestigt, was weiter unten noch näher beschrieben wird. Die vorzugsweise aus Aluminium bestehende Trennwand bildet gleichzeitig ein Widerlager für das Lager nach der Erfindung und ist somit fest angeordnet.

In der Trennwand 9 über deren Umfang gleichmässig verteilt befinden sich Drosselöffnungen 10 zur Verbindung der Kammervolumina der beiden Kammern 5, 6 miteinander. Somit können auf dem Fachmann grundsätzlich geläufige Weise auf das Lager vornehmlich in axialer Richtung wirkende Stösse gedämpft werden dadurch, dass die Dämpfungsflüssigkeit durch die Drosselöffnungen 10 jeweils von der einen Kammer 5 in die andere Kammer 6 und umgekehrt gedrückt und dabei gedrosselt wird.

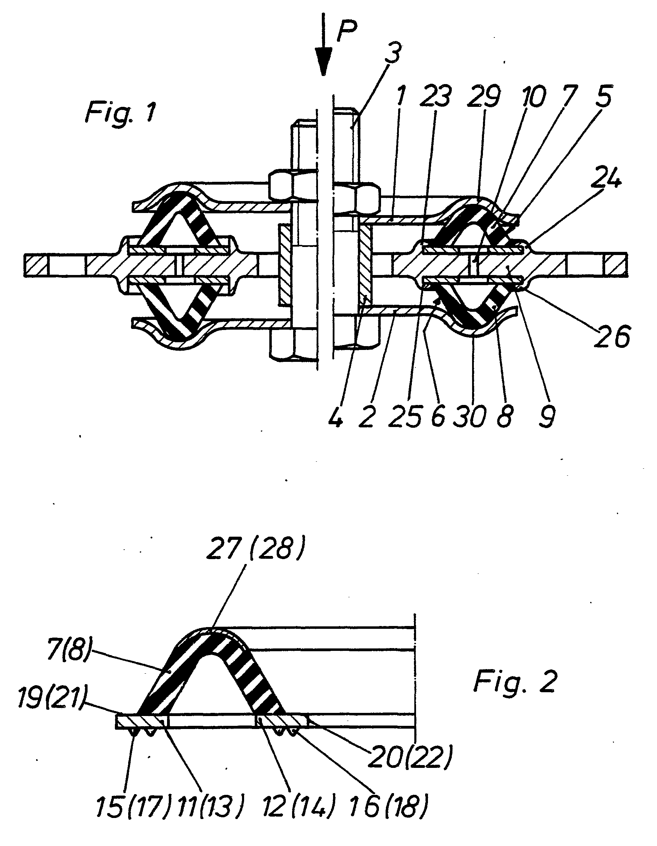

Wie aus Fig. 2 noch deutlicher ersichtlich, sind die gummielastischen Umfangswände 7, 8 der einzelnen Kammern 5 bzw. 6 jeweils im Querschnitt annähernd halbkreis- oder V-förmig, wobei an den beiden axial innenliegenden Stirnflächen jeder Kammer 5 bzw. 6 jeweils ein umlaufendes metallisches Teil 11 und 12 bzw. 13 und 14 anvulkanisiert ist. Die metallischen Teile 11, 12 bzw. 13, 14 weisen an ihrer der Trennwand 9 zugewandten Stirnfläche jeweils mehrere anvulkanisierte umlaufende Dichtlippen 15 und 16 bzw. 17 und 18 auf.

An den von der gummielastischen Umfangswand 7 bzw. 8 vorstehenden Rändern 19 und 20 bzw. 21 und 22 sind die metallischen Teile 11, 12 bzw. 13, 14 jeweils von einer umlaufenden Nase 23 und 24 bzw. 25 und 26 eingespannt. Somit ergibt sich eine sichere und dichte Verbindung der Kammern 5, 6 mit der Trennwand 9.

Die gummielastischen Umfangswände 7 bzw. 8 weisen mit Vorteil jeweils in ihrem axial aussenliegenden Scheitelbereich eine umlaufende metallische Kappe 27 bzw. 28 auf. Die Kappe 27 bzw. 28 ist durch Vulkanisation mit der zugehörigen elastischen Umfangswand 7 bzw. 8 verbunden und jeweils von einer dünnen Gummischicht überzogen (Gummiüberlauf). Die dünne Gummischicht verhindert dabei grundsätzlich ein seitliches Verrutschen zwischen den Kammern 5, 6 und den zugehörigen Stirnwänden 1, 2 und ergibt Korrosionsschutz der Kappen.

Eine noch weitere Verbesserung der sicheren Halterung der Kammern 5, 6 zwischen den Stirnwänden 1, 2 ergibt sich dadurch, dass die Stirnwände 1, 2 jeweils im Bereich des an sie angrenzenden Scheitelbereichs der gummielastischen Umfangswände 7, 8 eine umlaufende Eindrückung 29 bzw. 30 aufweisen.

Im übrigen hat bei einer bevorzugten Ausführung die der Last P zugewandte Kammer 5 ein grösseres Kammervolumen als die Kammer 6, was jedoch in der Zeichnung nicht erkennbar ist. Ferner kann die gummielastische Umfangswand 7 der der Last P zugewandten Kammer 5 eine höhere Federrate haben als die der anderen Kammer 6.

Bei der Herstellung des Lagers erfolgt das Verrollen der Nasen 23, 24 und 25, 26 der Trennwand 9 aus der Anordnung gemäss der linken Zeichnungshälfte von Fig. 1 in die Lage gemäss der rechten Zeichnungshälfte zweckmässigerweise unter Wasser. Das anschliessende axiale Verspannen der Stirnwände 1, 2 und somit des gesamten Lagers erfolgt auf dem Fachmann grundsätzlich bekannte Weise durch Betätigung des Schraubmechanismus des Bolzens 3 bis zum Anschlag an der Abstandshülse 4.

## Patentansprüche

1. Gummielastisches Lager mit hydraulischer Dämpfung, bei welchem zwischen zwei äusseren starren Stirnwänden (1, 2), die, insbesondere durch einen die abzustützende Last (P) aufnehmenden zentralen Bolzen (3), gegeneinander verspannt sind, zwei ein Dämpfungsmedium enthaltende Kammern (5, 6) mit gummielastischen Umfangswänden (7, 8) axial hintereinander angeordnet sind, wobei zwischen den beiden Kammern (5, 6) eine wenigstens eine Drosselöffnung (10) zur Verbindung der Kammervolumina enthaltende, mit einem Widerlager verbundene Trennwand (9) angeordnet ist, dadurch gekennzeichnet, dass die Trennwand (9) starr ausgebildet und fest angeordnet ist und das Widerlager selbst bildet, und dass die gummielastischen Umfangswände (7, 8) der Kammern (5, 6) torusförmig ausgebildet und an der Trennwand (9) befestigt sind.

2. Lager nach Anspruch 1, dadurch gekennzeichnet, dass die gummielastischen Umfangswände (7, 8) der einzelnen Kammern (5, 6) jeweils im Querschnitt annähernd halbkreis- oder V-förmig sind, wobei an den beiden axial innenliegenden Stirnflächen jeder Kammer (5, 6) jeweils ein umlaufendes starres Teil (11, 12, 13, 14) dicht angeschlossen ist, das mit der Trennwand (9) dicht verbunden ist.

3. Lager nach Anspruch 2, dadurch gekennzeichnet, dass das metallische und durch Vulkanisation mit der gummielastischen Umfangswand (7, 8) verbundene starre Teil (11, 12, 13, 14) an seiner der Trennwand (9) zugekehrten Stirnfläche wenigstens eine anvulkanisierte umlaufende Dichtlippe (15, 16, 17, 18) aufweist und an seinem von der gummielastischen Umfangswand (7, 8) vorstehenden Rand (19, 20, 21, 22) von einer umlaufenden Nase (23, 24, 25, 26) der Trennwand (9) eingespannt ist.

4. Lager nach einem der Ansprüche 1 bis 3, dadurch gekennzeichnet, dass die gummielastischen Umfangswände (7, 8) jeweils in ihrem axial aussenliegenden Scheitelbereich eine umlaufende starre Kappe (27, 28) aufweisen.

5. Lager nach Anspruch 4, dadurch gekennzeichnet, dass die metallischen und durch Vulkanisation mit der gummielastischen Umfangswand (7, 8) verbundene Kappe (27, 28) von einer dünnen Gummischicht überzogen ist.

6. Lager nach einem der Ansprüche 1 bis 5, dadurch gekennzeichnet, dass die metallischen starren Stirnwände (1, 2) jeweils im Bereich des an sie angrenzenden Scheitelbereichs der gummielastischen Umfangswände (7, 8) eine umlaufende Eindrückung (29, 30) zur Aufnahme dieser aufweisen.

7. Lager nach einem der Ansprüche 1 bis 6, dadurch gekennzeichnet, dass die der abzustützenden Last (P) zugewandte Kammer (5) ein grösseres Kammervolumen hat als die andere Kammer (6).

8. Lager nach einem der Ansprüche 1 bis 7, dadurch gekennzeichnet, dass die gummielastische Umfangswand (7) der der abzustützenden Last (P) zugewandten Kammer (5) eine höhere Federrate aufweist als die der anderen Kammer (6).

9. Lager nach einem der Ansprüche 1 bis 8, dadurch gekennzeichnet, dass die Trennwand (9) aus einem Leichtmetallwerkstoff, insbesondere Aluminium, besteht.

## Claims

1. Resilient rubber support with hydraulic damping in which two chambers (5, 6) with elastic peripheral walls (7, 8) and containing a damping medium are arranged axially one behind the other between two outer rigid face walls (1, 2) which are clamped together, in particular by a central pin (3) which takes the load (P) to be supported, a dividing wall (9) connected to an abutment being arranged between the two chambers (5, 6) and containing at least one throttle opening (10) for connecting the two chambers characterised in that, the dividing wall (9) is of rigid form and is arranged to be fixed and forms the abutment itself, and that the elastic peripheral walls (7, 8) of the chambers (5, 6) are of toroidal shape and are secured to the dividing wall (9).

2. Support according to Claim 1, characterised in that, the elastic peripheral walls (7, 8) of the individual chambers (5, 6) are each of substantially semi-circular or V-shaped cross section, a respective circumferentially extending rigid member (11, 12, 13, 14) being sealed to the two axially innermost faces of each chamber (5, 6) and being sealingly joined to the dividing wall (9).

3. Support according to Claim 2, characterised in that, the metallic rigid member (11, 12, 13, 14), which is connected to the elastic peripheral wall (7, 8) by vulcanisation, has on that face of it which is towards the dividing wall (9) at least one vulcanised-on circumferentially extending sealing lip (15, 16, 17, 18) and at its rim (19, 20, 21, 22) which projects beyond the elastic peripheral wall (7, 8) it is clamped by a circumferentially extending nose portion (23, 24, 25, 26) of the dividing wall (9).

4. Support according to one of Claims 1 to 3, characterised in that, the elastic peripheral walls (7, 8) each have at their axially outermost apex region a circumferentially extending rigid cap (27, 28).

5. Support according to Claim 4, characterised in that, the metallic cap (27, 28) which is connected to the elastic peripheral wall (7, 8) by vulcanisation, is coated with a thin layer of rubber.

6. Support according to one of Claims 1 to 5, characterised in that, the metallic rigid walls (1, 2) each have a circumferentially extending channel portion (29, 30) in the region of the apex portion (which engages the rigid wall) of the elastic peripheral walls (7, 8), to receive the apex portion.

7. Support according to one of Claims 1 to 6, characterised in that, the chamber (5) which is towards the load (P) to be supported has a larger internal volume than the other chamber (6).

8. Support according to one of Claims 1 to 7, characterised in that, the elastic peripheral wall (7) of the chamber (5) which is towards the load (P) to be supported has a higher spring rate than that of the other chamber (6).

9. Support according to one of Claims 1 to 8, characterised in that, the dividing wall (9) is made of a light metal, in particular aluminium.

**Revendications**

1. Support à élasticité type caoutchouc et amortissement hydraulique, dans lequel entre deux parois frontales (1, 2) rigides extérieures bridées entre elles, en particulier par un boulon central (3) qui reçoit la charge (P) à reprendre, sont disposées, l'une derrière l'autre axialement, deux chambres (5, 6), contenant un fluide d'amortissement, à parois périphériques à élasticité type caoutchouc (7, 8), étant précisé qu'entre les deux chambres (5, 6) est disposée une paroi séparatrice (9) liée à un contre-support et contenant au moins une ouverture de laminage (10) pour relier les volumes des chambres, caractérisé en ce que la paroi séparatrice (9) est de conception rigide, qu'elle est disposée de façon fixe et forme elle-même le contre-support; et en ce que les parois périphériques (7, 8), à élasticité type caoutchouc, des chambres (5, 6) sont en forme de tore et sont fixées à la paroi séparatrice (9).

2. Support selon la revendication 1, caractérisé en ce que les parois périphériques (7, 8), à élasticité type caoutchouc, des différentes chambres (5, 6) ont respectivement en coupe une forme approximativement en demi-cercle ou en V, étant précisé qu'aux deux surfaces frontales, situées à l'intérieur selon l'axe, de chaque chambre (5, 6) est respectivement reliée de façon étanche une pièce périphérique rigide (11, 12, 13, 14) qui est reliée de façon étanche à la paroi séparatrice (9).

3. Support selon la revendication 2, caractérisé en ce que la pièce rigide (11, 12, 13, 14) métallique et reliée par vulcanisation à la paroi périphérique (7, 8) à élasticité type caoutchouc présente, à sa surface frontale côté de la paroi séparatrice (9) au moins une lèvre d'étanchéité (15, 16, 17, 18) périphérique vulcanisée et en ce que, par son bord (19, 20, 21, 22) qui déborde de la paroi périphérique (7, 8) à élasticité de type caoutchouc, elle est bridée par un talon (23, 24, 25, 26) périphérique de la paroi séparatrice (9).

4. Support selon l'une quelconque des revendications 1 à 3, caractérisé en ce que les parois périphériques (7, 8) à élasticité de type caoutchouc présentent respectivement dans la zone de leur sommet située axialement à l'extérieur un chapeau rigide périphérique (27, 28).

5. Support selon la revendication 4, caractérisé en ce que le chapeau (27, 28) métallique est relié par vulcanisation à la paroi périphérique (7, 8) à élasticité de type caoutchouc et revêtu d'une couche de caoutchouc mince.

6. Support selon l'une des revendications 1 à 5, caractérisé en ce que les parois frontales (1, 2) métalliques rigides présentent respectivement, dans la zone du sommet, qui les jouxte, des parois périphériques (7, 8) à élasticité de type caoutchouc, une empreinte périphérique (29, 30) pour les recevoir.

7. Support selon l'une des revendications 1 à 6, caractérisé en ce que la chambre (5) côté de la charge (P) à reprendre présente un volume de chambre supérieur à l'autre chambre (6).

8. Support selon l'une des revendications 1 à 7, caractérisé en ce que la paroi périphérique (7), à élasticité de type caoutchouc, de la chambre (5), côté de la charge (P) à reprendre, présente un coefficient d'élasticité supérieur à celui de l'autre chambre (6).

9. Support selon l'une des revendications 1 à 8, caractérisé en ce que la paroi séparatrice (9) est faite en un matériau de métal léger, en particulier aluminium.

Fig. 1

Fig. 2